Europäisches Patentamt

(19) European Patent Office

Office européen des brevets

(11) Publication number: **0 061 096
B1**

(12) **EUROPEAN PATENT SPECIFICATION**

(45) Date of publication of patent specification: **06.02.85**

(21) Application number: **82102010.4**

(22) Date of filing: **12.03.82**

(51) Int. Cl.⁴: **G 06 F 9/38**

(54) **Data processing system for parallel processing.**

(30) Priority: **20.03.81 JP 39536/81**

(43) Date of publication of application:
**29.09.82 Bulletin 82/39**

(45) Publication of the grant of the patent:
**06.02.85 Bulletin 85/06**

(84) Designated Contracting States:
**DE FR GB**

(56) References cited:
**DE-A-2 425 380
US-A-3 229 260
US-A-4 053 947**

**Communication of the ACM Jan. 1978, Vol. 21,
No. 1, pp. 63-72**

(73) Proprietor: **FUJITSU LIMITED
1015, Kamikodanaka Nakahara-ku
Kawasaki-shi Kanagawa 211 (JP)**

(72) Inventor: **Sakamoto, Kazushi
Satsukiso, 167 Miyauchi Nakahara-ku
Kawasaki-shi Kanagawa 211 (JP)**
Inventor: **Okamoto, Tetsuro
2-29-203, Fujinodaidanchi
Machida-shi Tokyo 194 (JP)**
Inventor: **Okutani, Shigeaki
Enokigaoka-jutaku a-31 30-1, Enokigaoka,
Midori-ku
Yokohama-shi Kanagawa 227 (JP)**

(74) Representative: **Seeger, Wolfgang, Dipl.-Phys.
European Patent Attorney Bereiteranger 15
D-8000 München 90 (DE)**

Courier Press, Leamington Spa, England.

# Description

This invention relates to a data processing system as defined in the first part of claim 1.

A data processing system providing plural operation units, for example, store operation unit, load operation unit, adding operation unit, multiplying operation unit and dividing operation unit, has already been used. However, existing scalar processing systems do not allow two or more operation units to execute in parallel different instructions. Moreover, existing vector operation units, for example, CRAY-1 allows two operation units to execute different instructions in parallel; cf 1), mentioned below, page 67, 1st paragraph. But, the instruction control means used for such parallel execution is considerably complicated and it is almost far from reality to control three or more operation units for the parallel operation by the same method. It is requested to refer to the following references for the CRAY-1.

1) Communication of the ACM, January 1978, Vol. 21, Number 1, Page 63 to 72. "The CRAY-1 Computer System."
2) "The CRAY-1 COMPUTER PRELIMINARY REFERENCE MANUAL" 1975, by Cray Research Inc.

US—A—3 229 260 shows a data processing system for parallel processing comprising a plurality of operation units which may execute different instructions. The processing elements include registers divided into 9 fields, data input-output registers divided into 3 fields and buffer registers divided into two fields. The buffers in each processing element are provided for storing program tags and address symbols. These pieces of information identify programs in parallel processing of different programs and indicate a sequence of instructions in the program. Each processing element is structured to include instruction control means and autonomously fetches instructions and executes them.

DE—A—2 425 380 and US—A—4 053 947 show systems of similar structure as US—A—3 299 260.

It is an object of the present invention to provide a novel data processing system which causes plural operation units to execute different instructions in parallel and to realize the control of said parallel operations with comparatively simplified hardware.

Further object and details of the present invention will be made apparent, upon reference to the following drawings.

Fig. 1 shows the pipe line processing of instructions in a scalar processor.

Fig. 2 shows the pipe line processing of instructions in an existing vector processor.

Fig. 3 is the block diagram of an ordinary vector processor.

Fig. 4 is the block diagram of a vector processor according to the present invention.

Fig. 5 is the structure of ordinary vector instruction.

Fig. 6 to Fig. 11 show in detail each block in Fig. 4.

Fig. 12 to Fig. 15 show the pipe line processing of instructions in the present invention.

Fig. 16 shows a drawing used to explain the functions of COMPRESS instruction.

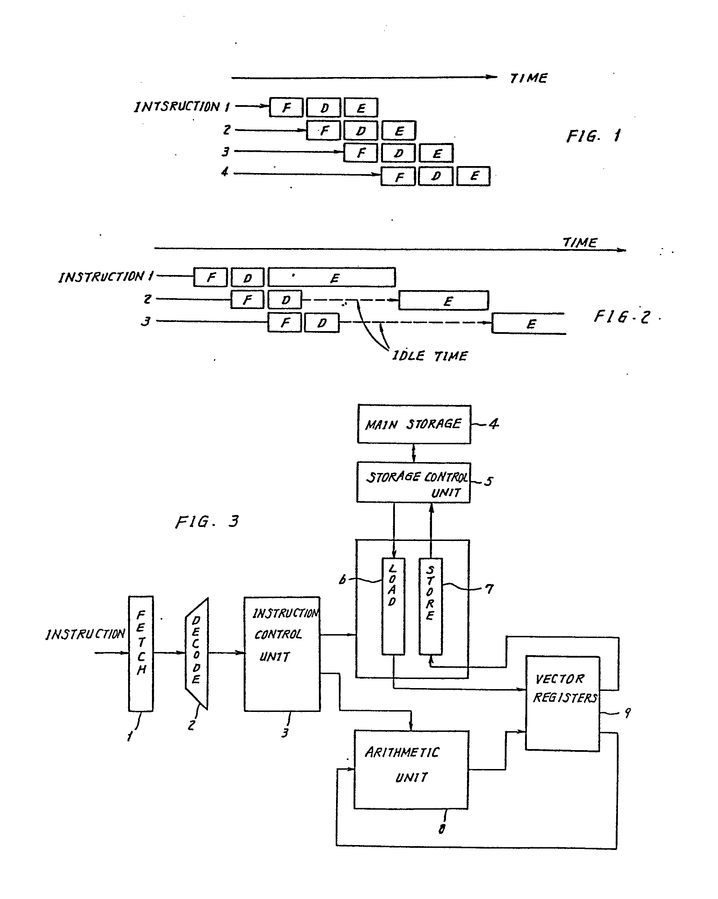

Figure 1 explains the pipe line processing in an ordinary scalar computer. In this figure, F is the instruction fetch stage, D is the instruction decode stage and E is the instruction execute stage, respectively. As will be understood from Fig. 1, for example, while the instruction 1 is being executed, the instruction 2 is decoded and the instruction 3 is fetched. Namely, the instructions 1, 2, 3... are executed in the form of a stream of processing. However, it is impossible to execute the instructions 1, 2 and 3 in the same stage.

In the control method of Fig. 1, if the processing time of the three stages of each instruction is equal, instructions flow smoothly. But if such processing times are not equal, some idle time is generated between stages as shown in Fig. 2.

In the case of a vector processor, an instruction processes many elements of vectors and resultingly the execute stage becomes longer as compared with the other stages, thus resulting in an idle time as shown in Fig. 2. An existing vector processor provides plural operation units of the pipe line structure corresponding to various instructions such as load, store, addition, multiplication and division.

Figure 3 shows the general block diagram of an ordinary vector processor, wherein 1 is the instruction fetch unit; 2 is the instruction decoder; 3 is the instruction control unit; 4 is the main storage unit; 5 is the storage control unit; 6 is the load operation unit; 7 is the store operation unit; 8 is the arithmetic unit; 9 is the vector registers, respectively.

The instruction fetch unit 1 is actually the scalar processor. This scalar processor sequentially fetches instructions from the main storage unit 4 via a route not illustrated. In case the instruction fetched is a scalar instruction, the scalar processor executes said scalar instruction by itself and in case the instruction fetched is a vector instruction, it transfers said instruction to the vector processor. The instruction decoder 2 decodes the vector instruction transferred and gives the result of decoding to the instruction control unit 3. The instruction control unit 3 controls execution of instructions and it controls the load operation unit 6, the store operation unit 7, the arithmetic unit 8 and the vector registers 9 in accordance with the result of instruction decoding. The storage control unit 5 intervenes between the access request generating unit and the main storage unit. The load operation unit 6 extracts vector data from the main storage unit 4 and writes this vector data to the vector registers 9. The store operation unit 7 stores the vector data read out from the vector registers to the main storage unit 4. The arithmetic unit 8 calculates a couple of vector data read out from the vector registers 9. The vector data as a result of calculation is again stored in the vector registers 9. The vector registers 9 are composed of high speed memory elements.

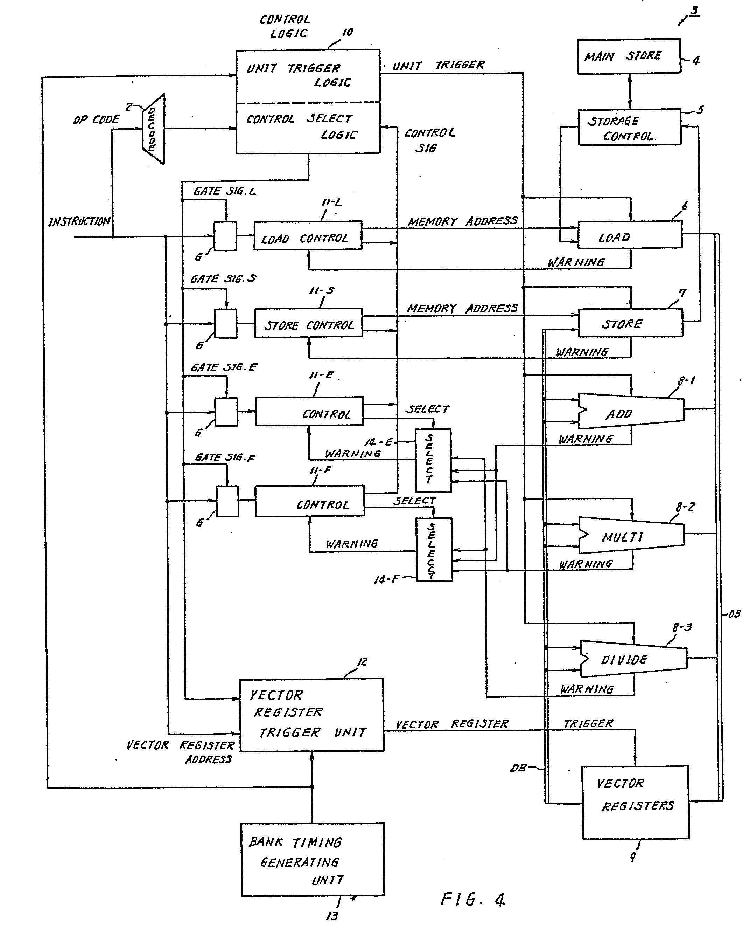

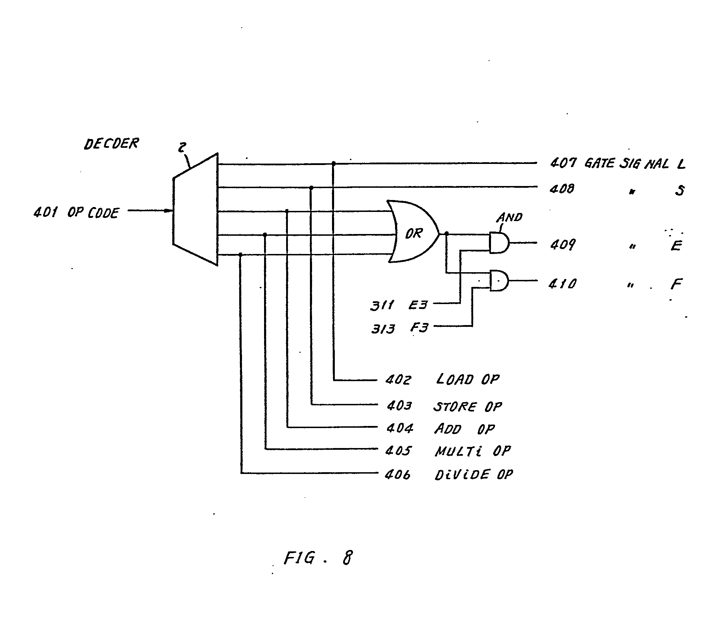

Figure 4 is the block diagram of an embodiment of the present invention, in which the instruction fetch unit 1 of Fig. 3 is omitted. In Fig. 4, 8-1 is the adder; 8-2 is the multiplier; 8-3 is the divider; 10 is the control logic means; 11-L to 11-F are instruction controls; 12 is the vector register trigger unit; 13 is the bank timing generator of vector registers 9; 14-E and 14-F are selectors; G is a gate and DB is a data bus, respectively.

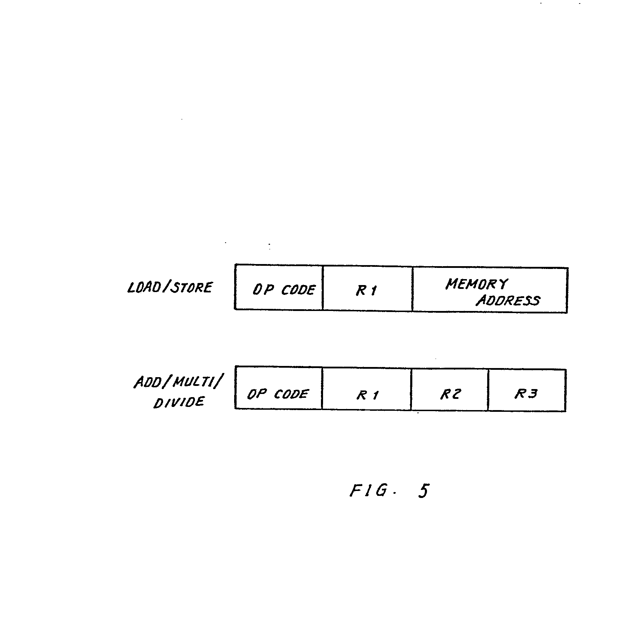

An instruction information contains, as shown in Fig. 5, the instruction code OP which indicates that the pertinent operation is to be executed. Moreover, the load/store instruction which is used for sending or receiving data between the main storage unit 4 and vector registers 9 contains the address of main storage unit MA and the address R of one of the vector registers 9, while the arithmetic instruction contains the addresses R1 to R3 of three vector registers 9 which designate two input operands and one output operand.

Upon receiving an instruction information, the kind of instruction (adding instruction or load instruction etc.) is distinguished by decoding the operation code with the decoder 2 and then it is sent to the control logic means 10. This control logic means 10 provides the unit trigger logic and the control select logic. The unit trigger logic generates the unit trigger signals and the control select logic generates the gate signals L, S, E or F. The unit trigger signals indicate in which operation unit among 6, 7, 8-1, 8-2 and 8-3 the given instruction should be executed. The gate signals indicate in which instruction control among 11-L to 11-F the given instruction should be controlled. These two logics generate the respective signals in accordance with the kind of the instruction, control information sent from the instruction controls and bank timing signal.

As will be explained later, the bank timing generator 13 comprises a ring counter and generates a bank timing signal determined by the ring counter. The bank timing signal specifies the timing of reading/writing data from/to the vector registers in accordance with the kind of instruction controls. Only when this timing matches, the pertinent instruction control can be started.

The instruction control 11-L controls the load operation unit 6, while the instruction control 11-S controls the store operation unit 7. The instruction control 11-E controls any one of the adder 8-1, multiplier 8-2 and divider 8-3. The instruction control 11-F is similar to the instruction control 11-E. Each of the instruction controls 11-L to 11-F respectively holds instruction input from the corresponding gate G. The instruction control 11-L holds also the warning signal sent from the load operation unit 6. The instruction control 11-S holds also the warning signal sent from the store operation unit 7. The instruction control 11-E holds an instruction and sends the select signal to the selector 14-E and then fetches the warning signal selected by the selector 14-E. The instruction control 11-F also operates in the same way as the instruction control 11-E. The instruction controls 11-L to 11-E respectively send the busy signal to the control logic means 10 as control information. The busy signal indicates that an instruction control is busy and the addresses of the operation units are being controlled and vector register is used for executing instructions.

The control logic means 10 refers to the kind of instruction as input, bank timing and control information. When the specified conditions are satisfied, said control logic means 10 selects the instruction control to which an instruction should be input and opens the gate G corresponding to the selected instruction control. Simultaneously, it selects the operation unit and generates the unit trigger signal to the selected operation unit. The vector register trigger unit 12 indicates the address of the vector register contained in the instruction and in any operation unit the instruction generated is executed. Simultaneously it receives the signal indicating the trigger start bank timing (the vector data receiving unit) and controls data transmission between the vector registers and operation units 6, 7, 8-1, 8-2, 8-3. Any of the instruction controls 11-L to 11-F stores the name of operation unit being controlled and the address of vector registers being used while the warning signal which indicates the end of execution of instruction is sent from the corresponding operation unit, and then it transmits these data to the control logic means 10 as the control information.

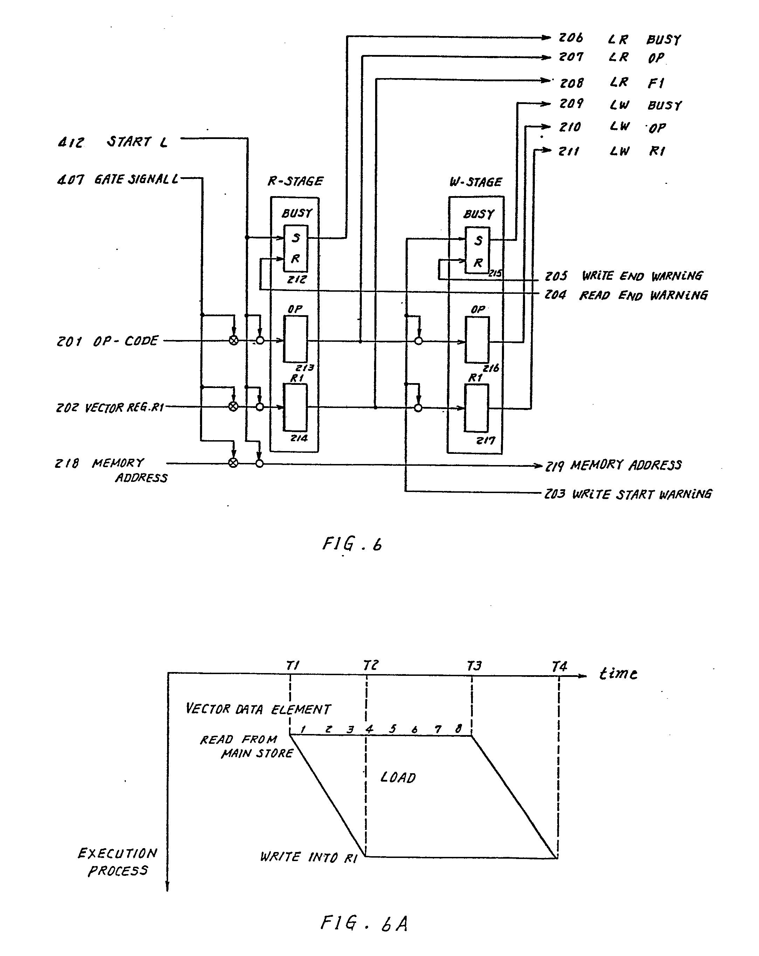

Figure 6 shows the internal circuit of instruction control 11-L. The instruction control is composed of the following two stages.

1. R stage (READ control stage)

Holding the instruction code (OP) of an instruction and address (R1) of vector register 9 while reading data from the main storage or vector register. During this period, BUSY becomes ON.

2. W stage (WRITE control stage)

Holding the instruction code (OP) of an instruction and address (R1) of vector register while writing data to the main storage or vector register. During this period, BUSY becomes ON.

In Fig. 6, 212, 215 are busy flip-flops; 213, 214, 216, 217 are registers. The load instruction is generally executed as shown in Fig. 6A. Figure 6A shows an example of loading eight (8) vector data elements from the memory to the vector register. At the timing of T1, START L of Fig. 6 sets the busy flip-flop 212; at the timing of T2, WRITE START WARNING (hereinafter abbreviated as WSW) sets the busy flip-flop 215; at the timing of T3, READ END WARNING (hereinafter abbreviated as REW) resets the flip-flop 212; and at the timing of T4, WRITE END WARNING (hereinafter abbreviated as WEW) resets the flip-flop 215. The START L sets the OP code and vector register address to the R stage. In addition, these data are set to the W stage by the WSW. The instruction control 11-S has also a similar structure and therefore it is not described in detail.

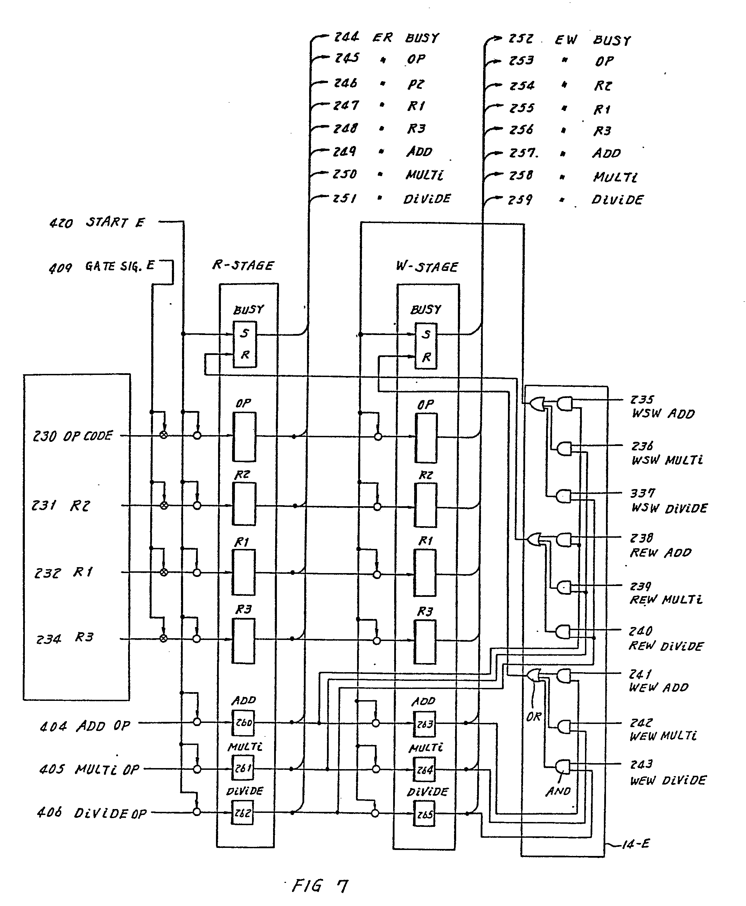

Figure 7 shows the internal circuit of the instruction control 11-E and selector 14-E. This circuit is almost the same as Fig. 6 in structure and operation, only except for that three pairs of vector register addresses are used and the signals ADD, MULTI or DIVIDE are used in order to indicate the kind of arithmetic operation. The instruction control 11-F has the same structure as Fig. 7.

Figure 8 shows an example of internal circuit of control select logic in the control logic means 10. An output of decoder 2 becomes directly the gate signal L and S for the load/store instruction. For the other arithmetic instruction, the gate signal E or F is obtained by the logical operation between an output of the decoder and the bank timing signals E3 and F3.

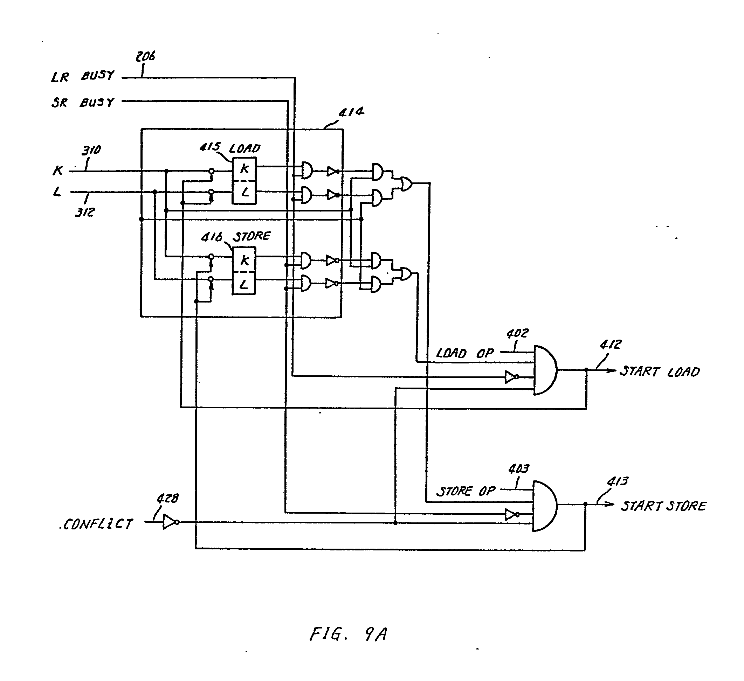

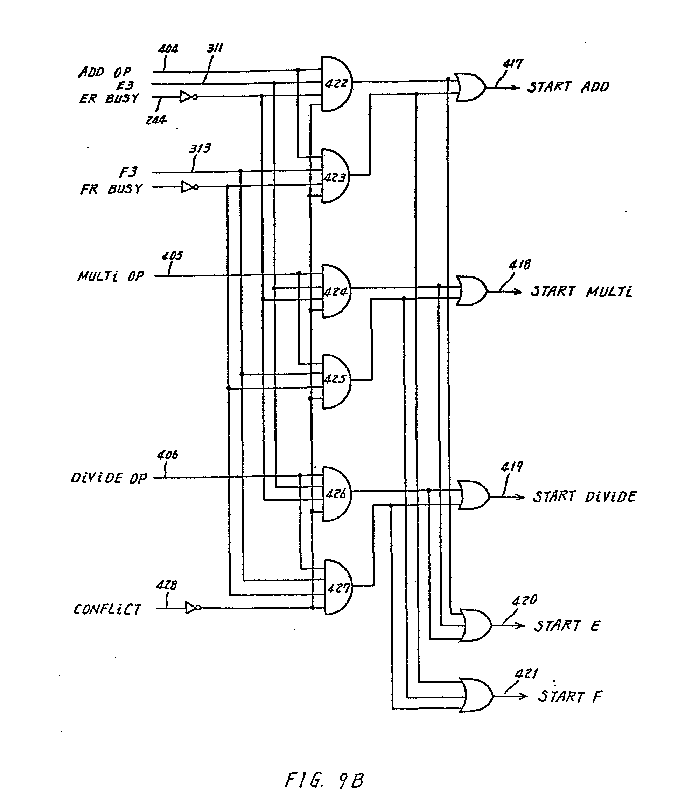

Figure 9A shows an example of internal circuit of the unit trigger logic in the control logic means 10. This figure particularly shows the trigger logic for load/store, while Figure 9B shows the trigger logic for an arithmetic instruction.

In Fig. 9A, 414 is the bank timing reserve circuit, showing by which of the bank timings K, L the LOAD instruction and STORE instruction are respectively executed by the registers 415 and 416. When LOAD OP of 402 is "1", the bank timing (L or K) which is different from the bank timing (K or L) of the STORE being executed is "1", the BUSY signal of instruction control 11-L of 206 is "0" and moreover when the CONFLICT signal (explained later) is "0", the START LOAD of 412 is generated. This signal is the trigger signal of operation unit LOAD and simultaneously the START signal of instruction control 11-L and also the START signal of register corresponding to the LOAD instruction of bank timing reserve circuit of 414. The same operation is carried out when the STORE OP of 403 is "1".

In Fig. 9B, when ADD OP of 404 is "1", the bank timing E3 of 311 is "1", ER BUSY of 244 is "0" (the R stage of instruction control is not BUSY) and the CONFLICT signal is "0", an output of 422 becomes "1" and START ADD of 417 is generated. Simultaneously, START E of 420 is transferred to the instruction control E. This also applies to the outputs of 423 to 427.

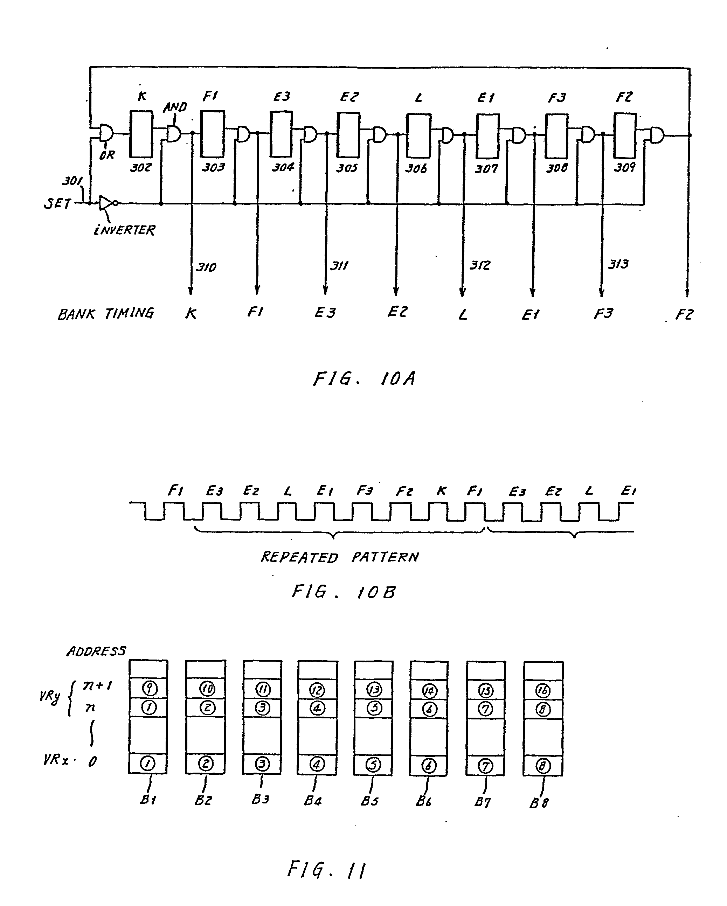

Figure 10A shows an example of internal circuit of the bank timing generating circuit. 302 to 309 are 1-bit registers. At first, only the bank timing of 302 becomes "1" but the others become "0" due to a SET signal of 301. When the SET signal becomes "0", the status "1" bit shifts to the right such as F1, E3... from K and when it reaches F2, it returns. Thereafter, K becomes "1". Thereafter, it is repeated. The bank timing E3, F3, K and L are sent to the control logic means, determining the timing of triggering operation units and instruction controls.

Figure 10B shows the phase relation of each bank timing.

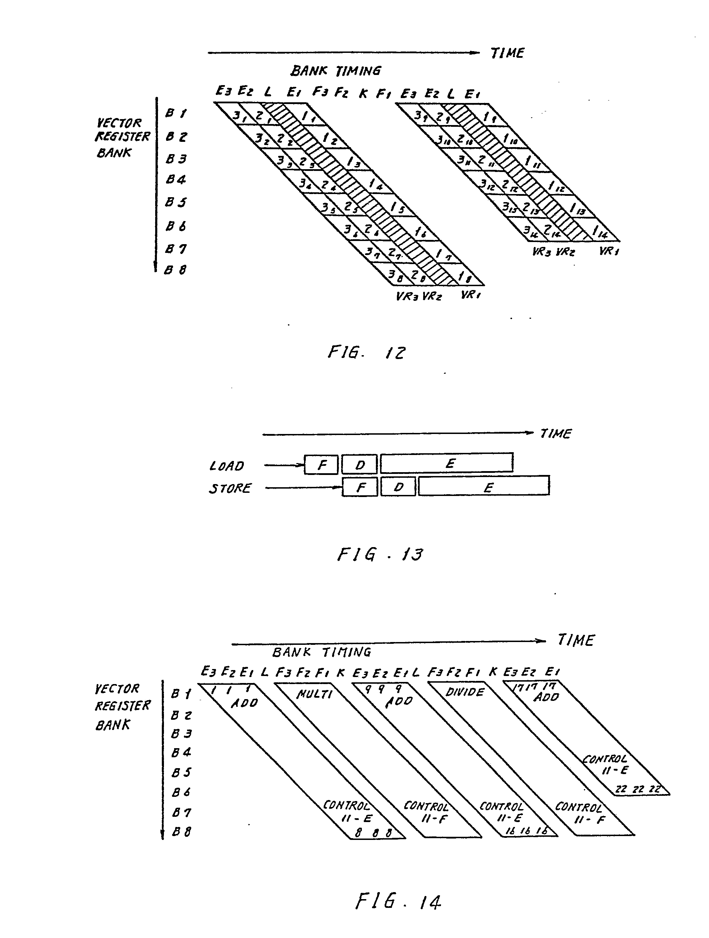

Figure 11 shows the structure of vector registers 9. In Fig. 11, B1 to B8 are banks and 1 2... are vector elements respectively. The vector registers 9 are composed of eight banks B1 to B8 and each bank B1 to B8 respectively stores plural vector elements. In case of making access to the vector registers 9, designation of one address allows automatically sequential access to eight elements related to the same address in the eight banks B1 to B8. In case it is requested to designate the vector having the elements of 8×N, it can be realized by designating N addresses. In Fig. 11, the vector register $VR_x$ having eight elements can be designated by designating address O and the vector register $VR_y$ having 16 elements can be designated by designating the addresses n and n+1. For the actual read/write operation, the access is made at first to the bank B1, then to the bank B2 after one clock and then sequentially to the banks B3, B4, B5, B6, B7 and B8.

It is impossible to make an access simultaneously to plural addresses in the same bank. Therefore, the timing for reading each address of the bank B1 must be controlled adequately. In the case of ordinary vector arithmetic instruction, a couple of vector data are read from the vector registers VR3, VR2 and the result of the respective arithmetic operation is written into the vector register VR1. Thus, as shown in Fig. 10B, the clock train is partitioned for every eight clocks and the eight clocks of the clock train are given the names E3, E2, L, E1, F3, F2, K, F1, respectively. The clocks E3 and F3 are timings for reading the address of bank B1 designated as the vector register VR3, while the clocks E2 and F2 are timings for reading the address of bank B1 designated as the vector register VR2 and the clocks E1 and F1 are timings for writing data into the address of bank B1 designated as the vector register VR1. The clocks K, L designate the timing for accessing the bank B1 on the occasion of executing the load instruction or store instruction.

Figure 12 shows an example of reading or writing the vector element for executing the arithmetic instruction. At the timing E3, an access is made to the bank B1 of vector register

VR3; at the timing E2, to the bank B2 of the vector register VR3 and the bank B1 of the vector register VR2; at the timing E1, to the bank B4 of the vector register VR3, bank B3 of the vector register VR2 and bank B1 of the vector register VR1, respectively. Successively access is made as indicated in the figure. As explained above, parallel accesses are never made simultaneously to the same bank during execution of one instruction.

As shown in Fig. 4, the instruction control 11-L exclusively controls the load operation unit 6, while the instruction control 11-S exclusively controls the store operation unit 7. The load operation unit 6 reads the main storage unit 4 and makes an access to it in accordance with the memory address sent from the instruction control 11-L and transmits vector data to the data bus DB. The store operation unit 7 stores the vector data, which is sent from the vector registers 9 in accordance with the memory address sent from the instruction control 11-S, to the main storage unit 4.

Upon receiving the load instruction, the control logic circuit 10 transmits the unit trigger signal to the load operation unit 6 at the bank timing L, simultaneously transmits the gate signal L, opens the gate G corresponding to the instruction control 11-L, and moreover informs that the vector data should be received by the load operation unit to the vector register trigger unit 12 by means of the LOAD OP 402 R. Upon reception of the store instruction following the load instruction, the control logic means 10 transmits the unit trigger signal to the store operation unit 7 at the bank timing K, transmits the gate signal S, and moreover informs that the vector data should be received by the store operation unit 7 to the vector register trigger unit 12 by means of the STORE OP 403.

Figure 13 shows the instruction execution sequence on the occasion that the load instruction and the store instruction are fetched in succession.

In case plural arithmetic instructions are fetched continuously, the instruction control unit 3 of Fig. 4 operates as explained below.

When the addition instruction is fetched, it is decoded by the instruction decoder 2 and sent to the control logic means 10. In case the timing of having received the instruction decode signal arrives after F3 but before E3 and the instruction control 11-E is not busy, the control logic means 10 transmits the unit trigger signal to the adder 8-1 at the timing E3 and opens the gate G corresponding to the instruction control 11-E by sending the gate signal E. Moreover, it informs the vector register trigger unit 12 by START ADD 417 and START E that the vector data should be received by the adder 8-1. When these signals are received, access to the vector registers 9 is started at the timings E3, E2, E1. In case the timing of having received the instruction decode signal is delaying from the timing E3 but preceding to the timing F3 or the instruction control 11-E is busy, the control logic means 10 sends the unit trigger signal to the adder 8-1 at the timing of F3 under the condition that instruction control 11-F is not busy, then opens the gate G corresponding to the instruction control 11-F by sending the gate signal F and informs the vector register trigger unit 12 that the vector data should be received by the adder 8-1 and the bank timings are F3, F2 and F1.

When the multiplication instruction is fetched under the condition that the adder 8-1 is controlled by the instruction control 11-E, the control logic means 10 sends the unit trigger signal to the multiplier 8-2 at the timing F3, opens the gate G corresponding to the instruction control 11-F by sending the gate signal F and informs the vector register trigger unit 12 that the vector data should be received by the multiplier 8-2 at the bank timings F3, F2 and F1. When the division instruction is fetched under the condition that the instruction controls 11-E and 11-F are busy, execution of division instruction is delayed until the instruction control 11-E or 11-F become idle.

Figure 14 shows an example of the instruction executing condition and vector register access condition in case the addition instruction of 22 elements, multiplication instruction of eight elements and division instruction of eight elements are fetched continuously. In an example of Fig. 14, when the addition instruction is fetched, the bank timings E3, E2, E1 are assigned to this addition instruction and the adder 8-1 is controlled by the instruction control 11-E. For the multiplication instruction following the addition instruction, the bank timings F3, F2, F1 are assigned and the multiplier 8-2 is controlled by the instruction control 11-F. The division instruction following the multiplication instruction is queued until the instruction control 11-E or 11-F becomes idle, and in an example of figure 14, since the instruction control 11-F precedingly becomes idle, the bank timings F3, F2, F1 are assigned to the division instruction and the divider 8-3 is controlled by the instruction control 11-F.

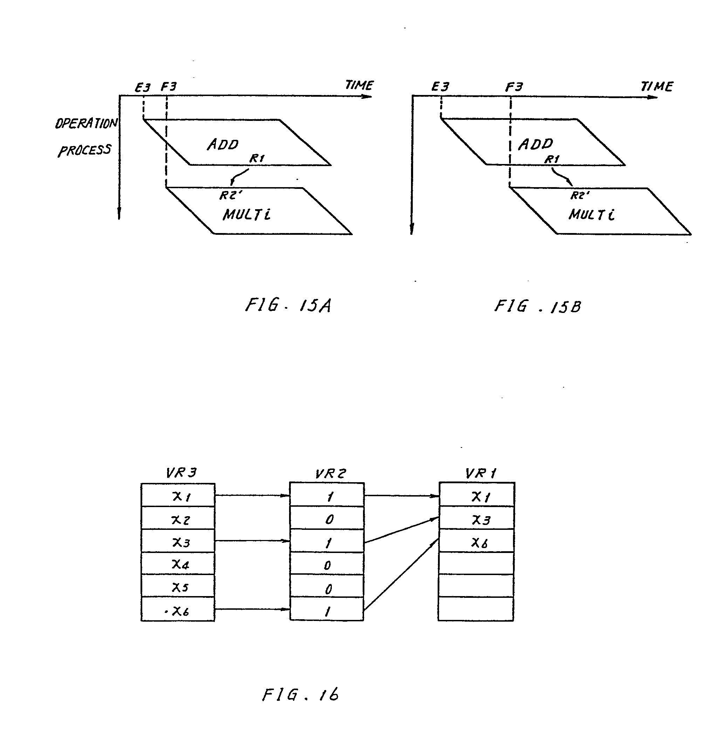

A register conflict exists if the result of the first instruction, for example, the addition instruction is used as the one operand of the second instruction, for example, the multiplication instruction. The register conflict can be detected by comparing the first operand address R1 of the first instruction and the second or third operand address R2 or R3 of the second instruction. When a conflict occurs, it is necessary, as shown in Fig. 15B, to start the MULTI instruction at the timing F3 after the end of writing the first element of an ADD instruction. When no conflict is occurring as shown in Fig. 15A, the MULTI instruction can be started at the timing F3 immediately after the start of ADD instruction.

Figure 16 explains a COMPRESS instruction. In case the COMPRESS instruction is fetched, when the element of vector register VR2 corresponding to the element Xi (i=1, 2,...) of vector register VR3 is "1", the elements Xi are stored in the vector register VR1 without resulting in any vacant element, or when the element of vector register VR2 is "0", the element Xi is not stored in the vector register VR1. The COMPRESS instruction is executed by the load operation unit 6 or store operation unit 7.

When the COMPRESS instruction is actually fetched, the control logic means 10 checks whether any of the instruction controls 11-L and 11-S is vacant or not and also checks whether any of the instruction controls 11-E and 11-F is vacant or not. If the instruction controls 11-L and 11-E were vacant, the control logic means 10 transmits the unit trigger signal to the load operation unit 6 at the timing E3 and informs the vector register trigger unit 12 that the vector data should be received by the load operation unit 6 and the bank timings are E3, E2, E1 by sending the gate signal L and gate signal E.

As explained above, the present invention proposes to provide a plurality of instruction controls each of which has a plurality of stages and allows them to execute in parallel different instructions. Moreover, conflict of access to the vector registers by plurality of instruction control can be prevented with simplified hardware by limiting the timing of making access to the vector registers by the respective instruction control.

## Claims

1. Data processing system for parallel processing comprising

a plurality of operation units (6, 7, 8-1, 8-2, 8-3) each of which executes a different instruction respectively,

vector registers (9) with which the operation units cooperate, and

a plurality of instruction control means (11-L, 11-S, 11-E, 11-F) characterised in

that each instruction control means (11-L, 11-S, 11-E, 11-F) includes means (212, 215) indicating the operating state busy of the operation units and has at least two stages (R, W) for reading out source operand data from a local storage (7) or vector registers (9) and for writing the result operand data into the local storage (7) or vector registers (9),

that each instruction control means (11-L, 11-S, 11-E, 11-F) is provided with bank timing signals (E3, E2, L, E1, F3, F2, K, F1, E3) from a bank timing generator (13) in accordance with the kind of instruction control means, operable to control different instruction execution in parallel,

that at least one of said instruction control means (11-L, 11-S, 11-E, 11-F) is used commonly for at least two of said operation units (6, 7, 8-1, 8-2, 8-3).

that control select logic means (10) are provided for selecting respective ones of the instruction control means (11-L, 11-S, 11-E, 11-F), in dependence on respective instructions, operating states busy and the bank timing signals.

2. Data processing system for parallel processing as claimed in claim 1, characterised in that at least two instruction control means (11-E, 11-F) are provided in common to at least three operation units (8-1, 8-2, 8-3).

3. Data processing system for parallel processing as claimed in claim 1 or 2 characterised in that the timing signal generator (13) is designed for generating repeated pre-defined timing patterns (E3, E2, L, E1, F3, F2, K, F1, E3,...).

4. Data processing system as claimed in any of the preceding claims characterised in that each of the plurality of operation units (6, 7, 8-1, 8-2, 8-3) is designed to execute a different kind of instruction respectively.

5. Data processing system for parallel processing as claimed in any of the preceding claims, characterised in that each of said stages (R, W) further comprises registers (213, 214, 216, 217) which hold an operation code of the instruction and operand addresses (Fig. 5).

6. Data processing system for parallel processing as claimed in any of the preceding claims, characterised in that some instruction control means (11-L, 11-S) are associated to respective operation units (6, 7).

7. Method of operating the data processing system as claimed in any of the preceding claims, characterised in that each of the instruction control means (11-L, 11-S, 11-E, 11-F) holds an instruction and controls at least one of said operation units (6, 7, 8-1, 8-2, 8-3),

and that a specific timing signal from the timing signal generator (13) is provided for one or more specific instruction control means (11-L, 11-S, 11-E, 11-F) to access the local storage (7),

and that said control select logic means (10) selects one of said instruction control means (11-L, 11-S, 11-E, 11-F) according to a given instruction, said timing signal and busy signals from said instruction control means.

## Patentansprüche

1. Datenverarbeitungssystem für parallele Verarbeitung, mit

einer Mehrzahl von Operationseinheiten (6, 7, 8-1, 8-2, 8-3), von denen jede jeweils einen verschiedenen Befehl ausführt,

Vektorregistern (9), mit denen die Operationseinheiten kooperieren, und

einer Anzahl von Befehlssteuereinrichtungen (11-L, 11-S, 11-E, 11-F), dadurch gekennzeichnet,

daß jede Befehlssteuereinrichtung (11-L, 11-S, 11-E, 11-F) Einrichtungen (212, 215) umfaßt, welche den Betriebszustand "arbeitet" der Operationseinheiten anzeigt und wenigstens zwei Stufen (R, W) hat, um Quelloperandendaten aus einem lokalen Speicher (7) oder Vektorregistern (9) zu lesen und um die Ergebnisoperandendaten in den lokalen Speicher (7) oder Vektorregister (9) zu lesen,

daß jeder Befehlssteuereinrichtung (11-L, 11-S, 11-E, 11-F) Banktaktsignale (E3, E2, L, E1, F3, F2, K, F1, E3) von einem Banktaktgenerator (13) in Übereinstimmung mit der Art der Befehlssteuereinrichtungen zugeführt werden, die im Betrieb die parallele Ausführung verschiedener Befehle steuern kann,

daß wenigstens eine der Befehlssteuereinrichtungen (11-L, 11-S, 11-E, 11-F) für wenigstens zwei der genannten Operationseinheiten (6, 7, 8-1, 8-2, 8-3) gemeinsam verwendet wird,

daß Steuerauswahllogikeinrichtungen (10) vorgesehen sind, um entsprechende der Befehlssteuereinrichtungen (11-L, 11-S, 11-E, 11-F), in Abhängigkeit von entsprechenden Befehlen, Betriebszuständen "arbeitet" und den Banktaktsignalen, auszuwählen.

2. Datenverarbeitungssystem für parallele Verarbeitung nach Anspruch 1, dadurch gekennzeichnet, daß wenigstens zwei Befehlssteuereinrichtungen (11-E, 11-F) gemeinsam für wenigstens drei Operationseinheiten (8-1, 8-2, 8-3) vorgesehen sind.

3. Datenverarbeitungssystem für parallele Verarbeitung nach Anspruch 1 oder 2, dadurch gekennzeichnet, daß der Zeitsteuerungssignalgenerator (13) für die Erzeugung wiederholter vorbestimmter Zeitsteuerungsmuster (E3, E2, L, E1, F3, F2, K, F1, E3,...) ausgelegt ist.

4. Datenverarbeitungssystem nach einem der vorhergehenden Ansprüche, dadurch gekennzeichnet, daß jede der Mehrzahl von Operationseinheiten (6, 7, 8-1, 8-2, 8-3) so ausgelegt ist, daß sie jeweils eine verschiedene Befehlsart ausführen kann.

5. Datenverarbeitungssystem für parallele Verarbeitung nach einem der vorhergehenden Ansprüche, dadurch gekennzeichnet, daß jede der Stufen (R, W) ferner Register (213, 214, 216, 217) umfaßt, welche einen Operationskode des Befehls und Operandenadressen (Fig. 5) hält.

6. Datenverarbeitungssystem für parallele Verarbeitung nach einem der vorhergehenden Ansprüche, dadurch gekennzeichnet, daß einige Befehlsteuereinrichtungen (11-L, 11-S) den entsprechenden Betriebseinheiten (6, 7) zugeordnet sind.

7. Verfahren zum Betrieb eines Datenverarbeitungssystems nach einem der vorhergehenden Ansprüche, dadurch gekennzeichnet, daß jede Befehlssteuereinrichtung (11-L, 11-S, 11-E, 11-F) einen Befehl hält und wenigstens eine der Operationseinheiten (6, 7, 8-1, 8-2, 8-3) steuert,

und daß ein spezifisches Zeitsteuerungssignal von dem Zeitsteuerungssignalgenerator (13) für eine oder mehrere spezifische Befehlssteuereinrichtungen (11-L, 11-S, 11-E, 11-F) vorgesehen ist, um zu dem lokalen Speicher (7) zuzugreifen,

und daß die genannte Steuerauswahllogikeinrichtung (10) eine oder mehrere der genannten Befehlssteuereinrichtungen (11-L, 11-S, 11-E, 11-F) entsprechend einem gegebenen Befehl, dem genannten Zeitsteuerungssignal und den "arbeitet"-Signalen der genannten Befehlssteuereinrichtung auswählt.

**Revendications**

1. Système de traitement de données permettant le traitement parallèle, comprenant:

plusieur unités d'exploitation (6, 7, 8-1, 8-2, 8-3) qui exécutent chacune une instruction respectivement différente,

des registres vectoriels (9) avec lesquels les unités d'exploitation coopèrent, et

plusieurs moyens de commande d'instructions (11-L, 11-S, 11-E, 11-F), caractérisé en ce que:

chaque moyen de commande d'instructions (11-L, 11-S, 11-E, 11-F) comporte un moyen (212, 215) indiquant l'état d'occupation des unités d'exploitation et possède au moins deux étages (R, W) pour la lecture de données d'opérandes source dans une unité d'emmagasinage locale (7) ou dans les registres vectoriels (9) et pour l'écriture des données d'opérandes résultantes dans l'unité d'emmagasinage locale (7) ou les registres vectoriels (9),

chaque moyen de commande d'instructions (11-L, 11-S, 11-E, 11-F) reçoit des signaux de synchronisation de modules (E3, E2, L, E1, F3, F2, K, F1, E3) de la part d'un générateur (13) de signaux de synchronisation de modules en fonction du type du moyen de commande d'instructions, avec pour fonction de commander l'exécution de différentes instructions en parallèle,

au moins l'un des moyens de commande d'instructions (11-L, 11-S, 11-E, 11-F) est utilisé en commun pour au moins deux desdites unités d'exploitation (6, 7, 8-1, 8-2, 8-3),

des moyens logiques de sélection de commande (10) sont prévus pour sélectionner certains, respectifs, des moyens de commande d'instructions (11-L, 11-S, 11-E, 11-F), en fonction des instructions, des états d'occupation et des signaux de synchronisation de modules, respectivement.

2. Système de traitement de données permettant le traitement parallèle selon la revendication 1, caractérisé en ce qu'au moins deux moyens de commande d'instructions (11-E, 11-F) sont fournis en commun à au moins trois unités d'exploitation (8-1, 8-2, 8-3).

3. Système de traitement de données permettant le traitement parallèle selon la revendication 1 ou 2, caractérisé en ce que le générateur (13) de signaux de synchronisation est conçu pour produire des configurations de signaux de synchronisation prédéfinies répétées (E3, E2, L, E1, F3, F2, K, F1, E3,...).

4. Système de traitement de données selon l'une quelconque des revendications précédentes, caractérisé en ce que chacune des unités d'exploitation (6, 7, 8-1, 8-2, 8-3) est conçue pour exécuter un type respectivement différent d'instruction.

5. Système de traitement de données permettant le traitement parallèle selon l'une quelconque des revendications précédentes, caractérisé en ce que chacun desdits étages (R, W) comprend en outre des registres (213, 214, 216, 217) qui maintiennent un code d'opération de l'instruction et des adresses d'opérandes (figure 5).

6. Système de traitement de données permettant le traitement parallèle selon l'une quelconque des revendications précédentes, caractérisé en ce que certains des moyens de commande d'instructions (11-L, 11-S) sont associés à des unités d'exploitation respectives (6, 7).

7. Procédé de fonctionnement du système de traitement de données selon l'une quelconque des revendications précédentes, caractérisé en ce que:

chacun des moyens de commande d'instructions (11-L, 11-S, 11-E, 11-F) maintient une instruction et commande au moins une desdites unités d'exploitation (6, 7, 8-1, 8-2, 8-3),

un signal de synchronisation spécifique venant du générateur (13) de signaux de synchronisation est fourni à un ou plusieurs moyens de commande d'instructions spécifiques (11-L, 11-S, 11-E, 11-F) afin de donner accès à l'unité d'emmagasinage locale (7),

et ledit moyen logique de sélection de commande (10) sélectionne l'un desdits moyens de commande d'instructions (11-L, 11-S, 11-E, 11-F) selon une instruction donnée, ledit signal de synchronisation et lesdits signaux d'occupation venant desdits moyens de commande d'instructions.

FIG. 1

FIG. 2

FIG. 3

FIG. 4

LOAD/STORE

| OP CODE | R 1 | MEMORY ADDRESS |
|---------|-----|----------------|

ADD/MULTI/ DIVIDE

| OP CODE | R 1 | R2 | R3 |
|---------|-----|----|----|

FIG. 5

0 061 096

FIG . 6

FIG . 6A

4

# 0 061 096

FIG 7

FIG . 8

FIG. 9A

FIG. 9B

FIG. 10A

REPEATED PATTERN

FIG. 10 B

FIG. 11

FIG. 12

FIG. 13

FIG. 14

10

FIG . 15A

FIG . 15B

FIG . 16

11